# EUROPEAN PATENT APPLICATION

(11) **EP 2 696 286 A2**
(43) Date of publication of application: **12.02.2014**
(21) Application number: 13178816.8
(22) Date of filing: 31.07.2013
(51) Int. Cl.: G06F 9/50

(54) **Electronic device and method for allocating resources for virtual machines**

(30) Priority: 06.08.2012 TW 101128335
(71) Applicant: Hon Hai Precision Industry Co., Ltd., New Taipei City (TW)
(72) Inventor: Peng, Kuan-Chiao, New Taipei (TW); Yeh, Chien-Fa, New Taipei (TW); Lee, Chung-I, New Taipei (TW); Lin, Yen-Hung, New Taipei (TW)
(74) Representative: Gray, John James

(57) **Abstract**

In a method for allocating resources for a virtual machine (VM), usage rates of specified resources of the VM are obtained (S11). A resource level of the VM is determined according to an average usage rate of each specified resource (S12), to obtain a proposal for a revised resource allocation corresponding to the resource-utilization level of the VM (S13). The proposed resource allocation is sent to a client computer (S14), and updated resources are allocated to the VM according to the proposal if the proposal is accepted (S15).

## Description

### Field

Embodiments of the present disclosure relate to cloud computing technology, and particularly to an electronic device and method for allocating resources for virtual machines.

### BackGround

Cloud computing technology provides services to client users with a lower cost. Because the client users do not need to buy much hardware, the client users can obtain the services by employing virtual machines from a cloud computing provider.

When a user employs the virtual machines from the cloud computing provider, the user can specify and buy resources of the virtual machines with a corresponding price. Then, the cloud computing provider allocates the specified resources to the user and makes a charge according to the price. However, when the user employs the virtual machines, he/she may not actually know the amount of resources really needed for completing the services. Therefore, a more efficient method for allocating resources of virtual machines is desired.

### Summary

### BRIEF DESCRIPTION OF THE DRAWINGS

Embodiments of the invention are described, by way of example only, with reference to the accompanying drawings, in which:

FIG. 1 is a schematic block diagram of a control server connecting with a plurality of virtual machine servers, client computers, and database servers.

FIG. 2 is a block diagram of one embodiment of the control server including a resource allocating system.

FIG. 3 is a schematic block diagram of function modules of the resource allocating system included in the control server.

FIG. 4 is a flowchart of one embodiment of a method for allocating resources for virtual machines using the control server.

FIG. 5 is a schematic diagram of a master/slave architecture of the plurality of database servers.

FIG. 6 is a schematic diagram of distributed parallel computing using the plurality of database servers.

### DETAILED DESCRIPTION

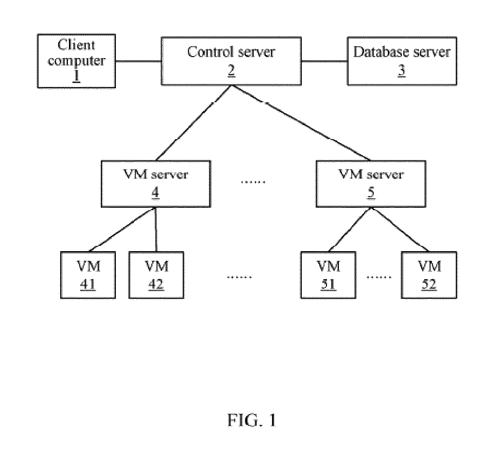

FIG. 1 is a schematic block diagram of a control server 2 connected to a plurality of virtual machine (VM) servers, client computers, and database servers. In one embodiment, the control server 2 is connected to the VM servers (e.g., a VM server 4 and a VM server 5), the client computers (only client computer 1 is shown in FIG. 1), and the database servers (only one database server 3 is shown in FIG. 1) through a network. The network may be an intranet, the Internet or other suitable communication network, such as general packet radio service (GPRS), WIFI/wireless local area network (WIFI/WLAN), third generation/wideband code division multiple access (3G/WCDMA), or 3.5G/high-speed downlink packet access (3.5G/HSDPA).

Each of the VM servers includes a VM monitoring program, which obtains usage rates of specified resources of the VMs installed on the VM server after a preset time interval (e.g., ten minutes), and sends the usage rates of the specified resources to the control server 2. In one embodiment, the usage rates of the specified resources may include, but are not limited to, a central processing unit (CPU) usage rate (CPU%), a memory usage rate (Memory%), and a hard disk usage rate (Disk%) of the VM servers occupied by the virtual machines. For example, the VM server 4 obtains the usage rates of the CPU of the virtual machines 41 and 42, and the VM server 5 obtains the usage rates of the CPU of the virtual machines 51 and 52. In other embodiments, the specified resources may be reduced or increased.

The control server 2 stores the usage rates of the specified resources of the virtual machines into different data tables in the database servers 3 according to a name of each virtual machine. For example, the usage rates of the specified resources of VM 41 are stored in a first data sheet "41 ", and the usage rates of the specified resources of VM 42 are stored in a second data sheet "42." The data sheet includes a plurality of columns, such as a name of the virtual machine, an identifier (ID) of the virtual machine, a CPU usage rate, a memory usage rate, and a hard disk usage rate of the virtual machine, and a storing time of the usage rates of the specified resources.

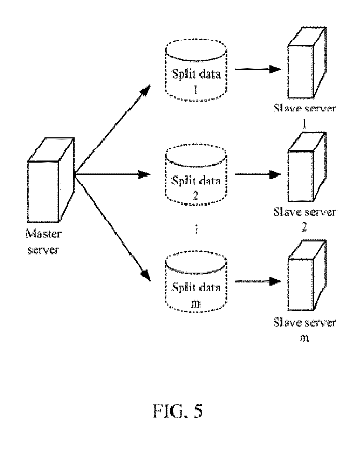

In one embodiment, the plurality of database servers 3 provide a function of distributed parallel computing. Referring to FIG. 5, the plurality of database servers 3 are distributed in a master/slave architecture. One of the database servers 3 is the master server, and the other database servers 3 are slave servers. The master server controls the computing of the slave servers, collects computing results from the slave servers, and transmits the collected computing results to the control server 2 for further processing.

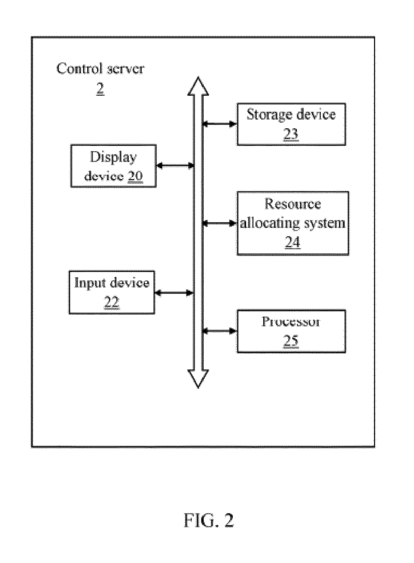

FIG. 2 is a block diagram of one embodiment of the control server 2 including a resource allocating system 24. In one embodiment, the control server 2 further includes a display device 20, an input device 22, a storage device 23, and at least one processor 25. FIG. 1 illustrates only one example of the control server 2 that may include more or fewer components than illustrated, or have a different configuration of the various components in other embodiments.

The display device 20 displays the usage rates of the specified resources of the virtual machines, and the input device 22 may be a mouse or a keyboard used for input. The storage device 23 may be a non-volatile computer storage chip that can be electrically erased and reprogrammed, such as a hard disk or a flash memory card.

In one embodiment, the resource allocating system 24 is used to dynamically update resource allocation of the virtual machines for the client computer 1 according to a change of the usage rates of specified resources of the virtual machines. The resource allocating system 24 may include computerized instructions in the form of one or more programs that are executed by the at least one processor 25 and stored in the storage device 23 (or memory). A detailed description of the resource allocating system 24 is given in the following paragraphs.

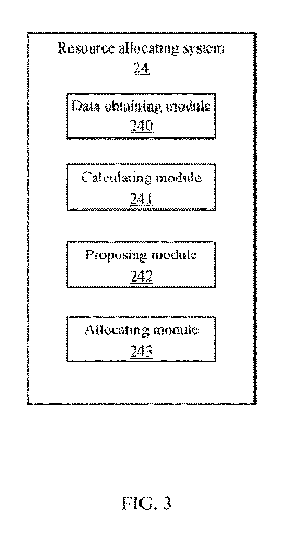

FIG. 3 is a block diagram of function modules of the resource allocating system 24 included in the control server 2. In one embodiment, the resource allocating system 24 may include one or more modules, for example, a data obtaining module 240, a calculating module 241, a proposing module 242, and an allocating module 243. In general, the word "module", as used herein, refers to logic embodied in hardware or firmware, or to a collection of software instructions, written in a programming language. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable medium include flash memory and hard disk drives.

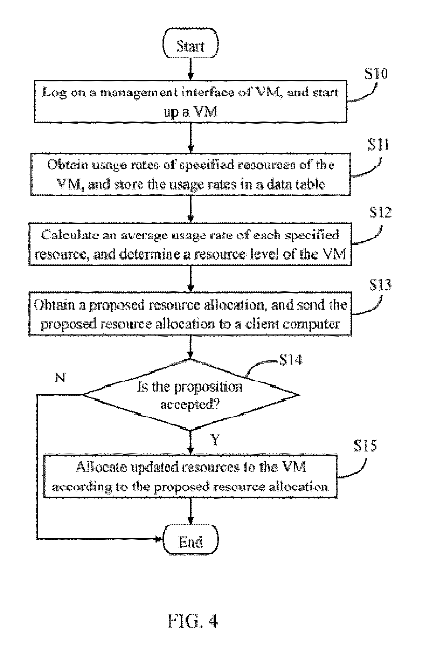

FIG. 4 is a flowchart of one embodiment of a method for allocating resources for virtual machines using the control server 2. Depending on the embodiment, additional steps may be added, others removed, and the ordering of the steps may be changed.

In step S10, a user logs on a management interface of the virtual machines through the client computer 1, and starts up a virtual machine (e.g., VM 41). The user may select a resource allocation, a price to pay, and a security mechanism of the virtual machine. For example, initial values of the resource allocation of the virtual machine is (CPU, Memory, Hard disk) = (2.5GB, 4GB, 200GB).

In step S11, the data obtaining module 240 obtains usage rates of specified resources of the virtual machine, and stores the usage rates of the specified resources of the virtual machine in a data table. The usage rates of the specified resources of the virtual machine are sampled by the VM server 4 and transmitted to the control server 2 through the network. The data obtaining module 240 may obtain the usage rates of the specified resources of the virtual machine after a preset time interval (e.g., one minute), the usage rates of the specified resources may include the CPU usage rate, the memory usage rate, and the hard disk usage rate.

In step S12, the calculating module 241 calculates an average usage rate of each specified resource of the virtual machine after a preset cycle time (e.g., one hour), and determines a resource-utilization level (hereinafter referred to as "resource level") of the virtual machine according to the average usage rate of each specified resource of the virtual machine. The resource level of the virtual machine is determined by a plurality of usage levels of the average usage rates of the specified resources (hereinafter referred to as "usage levels of the specified resources") of the virtual machine. For example, supposing that the specified resources include three types (e.g., the CPU, the memory, and the hard disk), and each of specified resources has three usage levels, thus the virtual machine has twenty-seven (3*3*3=27) resource levels according to different combinations of the usage levels.

In one embodiment, the calculating module 241 calculates the average usage rate of each specified resource of the virtual machine using a distributed parallel computing method. In the distributed parallel computing method, the calculating module 241 splits the data of the usage rates of the specified resources of the virtual machine into different groups according to a sequence of the times when data is obtained (obtaining time), assigns the data of the usage rates of the specified resources in each group into a database server 3, and calculates a sum of the usage rates of each specified resource in each group.

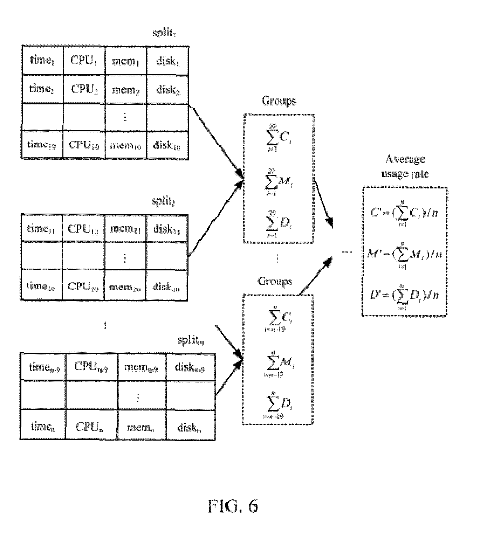

For example, referring to FIG. 6, the calculating module 241 splits the data of the usage rates into different groups of "split₁", "split₂", and "splitₘ", where each group includes ten usage rates of the specified resources at ten time points. The first group "split₁" includes the usage rates of the specified resources (the CPU, the memory, and the hard disk) from a time point "time₁" to time point "time₁₀", and the second group "split₂" includes the usage rates of the specified resources from a time point "time₁₁" to time point "time₂₀". Referring to FIG. 5, the data in the first group "split₁" may be assigned to a first slave server 1 for calculating a sum of the usage rates of each specified resource in the first group, and the data in the second group "split₂" may be assigned to a second slave server 2 for calculating a sum of the usage rates of each specified resource in the second group. Then, the results of calculation for each specified resource are returned to the control server 2.

The calculating module 241 calculates a total sum of the usage rates of each specified resource in the different groups, divides the total sum by a number of the usage rates of each specified resource, and obtains an average usage rate of each specified resource of the virtual machine, such as an average usage rate of the CPU, an average usage rate of the memory, and an average usage rate of the hard disk.

For example, referring to FIG. 6, "n" represents the number of the usage rates of each specified resource, "i" represents the time point, "Cᵢ" represents the usage rate of the CPU at the time point "i", "Mᵢ" represents the usage rate of the memory at the time point "i", and "Dᵢ" represents the usage rate of the hard disk at the time point "i". "C"' represents the average usage rate of the CPU, "M"' represents the average usage rate of the memory, and "D"' represents the average usage rate of the hard disk.

In one embodiment, the specified resources include three types, such as the CPU, the memory, and the hard disk. The average usage rates of each specified resource are divided into three usage levels by two threshold values. A method for determining the resource level of the virtual machine according to different combinations of the usage levels of each specified resource is as follows.

If the average usage rate of a first type (e.g., the CPU) of the specified resources is less than or equal to a first threshold value (e.g., 20%), then the usage level of the first type of the specified resources is determined to be a first level, which may be recorded using a symbol "I".

If the average usage rate of the first type of the specified resources is greater than the first threshold value and is less than or equal to a second threshold value (e.g., 70%), then the usage level of the first type of the specified resources is determined to be a second level, which may be recorded using a symbol "II".

If the average usage rate of the first type of the specified resources is greater than the second threshold value, then the usage level of the first type of the specified resources is determined to be a third level, which may be recorded using a character "III".

In a similar way, if the average usage rate of a second type (e.g., the memory) of the specified resources is less than or equal to a third threshold value (e.g., 40%), then the usage level of the second type of the specified resources is determined to be a first level, which may be recorded using a symbol "A".

If the average usage rate of the second type of the specified resources is greater than the third threshold value and is less than or equal to a fourth threshold value (e.g., 80%), then the usage level of the second type of the specified resources is determined to be a second level, which may be recorded using a symbol "B".

If the average usage rate of the second type of the specified resources is greater than the fourth threshold value, then the usage level of the second type of the specified resources is determined to be a third level, which may be recorded using a character "C".

In a similar way, if the average usage rate of a third type (e.g., the hard disk) of the specified resources is less than or equal to a fifth threshold value (e.g., 30%), then the usage level of the third type of the specified resources is determined to be a first level, which may be recorded using a symbol "i".

If the average usage rate of the third type of the specified resources is greater than the fifth threshold value and is less than or equal to a sixth threshold value (e.g., 60%), then the usage level of the third type of the specified resources is determined to be a second level, which may be recorded using a symbol "ii".

If the average usage rate of the third type of the specified resources is greater than the sixth threshold value, then the usage level of the third type of the specified resources is determined to be a third level, which may be recorded using a character "iii".

For example, supposing that "Spec_{CPU}" represents the usage level of the CPU, "Spec_{MEM}" represents the usage level of the memory, and "Spec_{Disk} " represents the usage level of the hard disk, then "Spec(Spec_{CPU} , Spec _{MEM}, Spec_{Disk})" represent the resource level of the virtual machine. An algorithm for determining the resource level of the virtual machine is as follows, where "Threshold₁" to "Threshold₆" represents the first threshold value to the sixth threshold value.
If (C' ≤ Threshold₁) Spec_{CPU} = I;
Else if (Threshold₁ < C' ≤ Threshold₂) Spec_{CPU} = II;
Else if (Threshold₂ < C' ) Spec_{CPU} = III;
If (M' ≤ Threshold₃) Spec_{MEM} = A;
Else if (Threshold₃ < M' ≤ Threshold₄) Spec_{MEM} = B;
Else if (Threshold₄ < M' ) Spec_{MEM} = C;
If (D' ≤ Threshold₅) Spec_{Disk} = i;
Else if (Threshold₅ < D' ≤ Threshold₆) Spec_{Disk} = ii;

Else if (Threshold₆ < D' ) Spec_{Disk} = iii.

In this embodiment, the average usage rate of each specified resource is divided into three usage levels by the two threshold values. The average usage rate of the CPU is divided into three usage levels of I, II, and III, the average usage rate of the memory is divided into three usage levels of A, B, and C, and the average usage rate of the hard disk is divided into three usage levels i, ii, and iii. Thus, the virtual machine has twenty-seven (3*3*3= 27) resource levels according to different combinations of the different usage levels of the three types of specified resources. A proposed resource allocation corresponding to each resource level is pre-determined. A proposed lower resource level allocates less resources, and a proposed higher resource level allocates more resources. For example, Spec(I, A, i) represents that the average usage rates of the three types of the specified resources are low, thus, less resources for the virtual machine are proposed to the user. Spec(III, C, iii) represents that the average usage rates of the three types of the specified resources are high, thus more resources for the virtual machine are proposed to the user.

In other embodiments, the usage levels of the specified resources may be increased or decreased by increasing the threshold values or decreasing the threshold values, so that different resource levels of the virtual machine are determined.

In step S13, the proposing module 242 obtains a proposed resource allocation corresponding to the resource level of the virtual machine, and sends the proposed resource allocation (proposal) to the client computer 1 that uses the virtual machine.
For example, the average usage rate of the CPU is 60% (C' = 60%), the average usage rate of the memory is 85% (M' = 85%), and the average usage rate of the hard disk is 20% (D' = 20%);

Because Threshold₁ < 60% < Threshold₂, thus, Spec_{CPU}=I.
Because Threshold₄ <85% , thus, Spec_{MEM}=C and

Because 20% < Threshold₅, thus, Spec_{Disk}=i.

The resource level "Spec(SpecCPU , SpecMEM , SpecDisk)" of the virtual machine is determined as Spec(I, C, i). For example, the proposed resource allocation corresponding to the resource level Spec(I,C, i) is as follows: CPU={500MB,...,1.75GB}, Memory={3.2GB,...,4GB}, and Hard disk={10GB,...,60GB}. The user may select updated resources of the virtual machine from the proposed resource allocation through the management interface of VM, or input updated resources manually according to the proposed resource allocation, or let the proposing module 242 determine updated resources automatically from the proposed resource allocation. The user may select the updated resources when the virtual machine is running (Hot Plug), or after the virtual machine stops running.

In step S14, the allocating module 243 determines whether the client computer 1 (the user) accepts the proposed resource allocation. For example, if the user selects the updated resources of (CPU=500MB, Memory=3.2GB, Hard disk=20GB) or lets the proposing module 242 determine the updated resources automatically, the allocating module 243 determines that the client computer 1 accepts the proposed resource allocation, then step S15 is executed. If the client computer 1 does not accept the proposed resource allocation, the procedure ends.

In step S15, the allocating module 243 allocates the updated resources to the virtual machine according to the proposed resource allocation. For example, if the user selects the updated resources of (500MB, 3.2GB, 20GB) from the proposed resource allocation, the allocating module 243 allocates the updated resources of (500MB, 3.2GB, 20GB) to the virtual machine. If the user lets the control server 2 (e.g., the proposing module 242) determine the updated resources automatically, the allocating module 243 determines the updated resources from the proposed resource allocation according to a preset sequence (e.g., a size of the resources in an ascending order) or randomly.

In this embodiment, the initial value of the resource allocation (e.g., 2.5GB, 4GB, 200GB) is not replaced by the updated resources (500MB, 3.2GB, 20GB), both of them are stored in the storage device 23 of the control device 2.

In other embodiments, merely one database server 3 is used, the control server 2 and the database server 3 are combined into one server or other suitable electronic device. Further, merely one VM server 4 may be used, the control server 2 and the VM server 4 can be combined into one server.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A method for allocating resources for a virtual machine using an electronic device, the method comprising:
obtaining usage rates of specified resources of the virtual machine using a processor of the electronic device;
calculating an average usage rate of each of the specified resources after a preset cycle time, and determining a resource level of the virtual machine according to the average usage rate of each of the specified resources;
obtaining a proposed resource allocation corresponding to the resource level of the virtual machine, and sending the proposed resource allocation to a client computer that uses the virtual machine; and
allocating updated resources to the virtual machine according to the proposed resource allocation.

2. The method according to claim 1, wherein the average usage rate of each of the specified resources is calculated using a distributed parallel computing method.

3. The method according to claim 2, wherein the distributed parallel computing method comprises:
splitting the usage rates of the specified resources into a plurality of groups, and calculating a sum of the usage rates of each of the specified resources in each of the plurality of groups by assigning the usage rates of the specified resources in each of the plurality of groups into a corresponding database server; and
calculating a total sum of the usage rates of each of the specified resources in all of the plurality of groups, and obtain an average usage rate of each of the specified resources by dividing the total sum with a number of the usage rates of each of the specified resources.

4. The method according to claim 3, wherein the usage rates of the specified resources are split into a plurality of groups according to a sequence of obtaining time of the usage rates of the specified resources.

5. The method according to any preceding claim, wherein the resource level of the virtual machine is determined by a plurality of usage levels of the average usage rates of the specified resources of the virtual machine.

6. The method according to claim 5, wherein the average usage rates of each of the specified resources are divided into a plurality of usage levels by preset threshold values of each of the specified resources.

7. The method according to claim 6, wherein a number of the preset threshold values of each of the specified resources is two, and the average usage rates of each of the specified resources are divided into three usage levels by the two preset threshold values of each of the specified resources.

8. An electronic device, comprising:
a processor;
a storage device storing a plurality of instructions, which when executed by the processor, causes the processor to:
obtain usage rates of specified resources of a virtual machine;
calculate an average usage rate of each of the specified resources after a preset cycle time, and determine a resource level of the virtual machine according to the average usage rate of each of the specified resources;
obtain a proposed resource allocation corresponding to the resource level of the virtual machine, and send the proposed resource allocation to a client computer that uses the virtual machine; and
allocate updated resources to the virtual machine according to the proposed resource allocation.

9. The electronic device according to claim 8, wherein the average usage rate of each of the specified resources is calculated using a distributed parallel computing method.

10. The electronic device according to claim 9, wherein the distributed parallel computing method comprises:
splitting the usage rates of the specified resources into a plurality of groups, and calculating a sum of the usage rates of each of the specified resources in each of the plurality of groups by assigning the usage rates of the specified resources in each of the plurality of groups into a corresponding database server; and
calculating a total sum of the usage rates of each of the specified resources in all of the plurality of groups, and obtain an average usage rate of each of the specified resources by dividing the total sum with a number of the usage rates of each of the specified resources.

11. The electronic device according to claim 10, wherein the usage rates of the specified resources are split into a plurality of groups according to a sequence of obtaining time of the usage rates of the specified resources.

12. The electronic device according to any of claims 8 to 11, wherein the resource level of the virtual machine is determined by a plurality of usage levels of the average usage rates of the specified resources of the virtual machine.

13. The electronic device according to claim 12, wherein the average usage rates of each of the specified resources are divided into a plurality of usage levels by preset threshold values of each of the specified resources.

14. The electronic device according to claim 13, wherein a number of the preset threshold values of each of the specified resources is two, and the average usage rates of each of the specified resources are divided into three usage levels by the two preset threshold values of each of the specified resources.

15. A storage medium having stored thereon instructions that, when executed by a processor of an electronic device, causes the processor to perform a virtual machine resource allocating method as claimed in any of claims 1 to 7.
